# EUROPÄISCHE PATENTSCHRIFT

(11) **EP 0 951 115 B1**
(45) Veröffentlichungstag und Bekanntmachung des Hinweises auf die Patenterteilung: **02.08.2006**
(21) Anmeldenummer: 99104635.0
(22) Anmeldetag: 09.03.1999
(51) Int. Cl.: H02B 1/30

(54) **Rahmenschenkel für ein Rahmengestell eines Schaltschrankes**
Frame member for an electrical cabinet frame
Montant pour un chassis d'une armoire de distribution

(30) Priorität: 17.04.1998 DE 19817916
(43) Veröffentlichungstag der Anmeldung: 20.10.1999
(73) Patentinhaber: Rittal-Werk Rudolf Loh GmbH & Co. KG, 35745 Herborn (DE)
(72) Erfinder: Nicolai, Walter, 35418 Buseck 1 (DE); Münch, Udo, 35764 Sinn (DE); Vogel, Georg, 71701 Schwieberdingen (DE)
(74) Vertreter: Fleck, Hermann-Joseph

(56) Entgegenhaltungen:
- FR-A- 2 708 391

## Beschreibung

Die Erfindung betrifft einen Rahmenschenkel für ein Rahmengestell eines Schaltschrankes, der eine Profilaußenseite und eine Profilinnenseite aufweist, deren Übergänge im Abstand von der Außeneckkante des Rahmengestelles liegen und der mit der Profilaußenseite zur Außeneckkante hin einen Freiraum zum Anlenken einer Schranktür und Einführen von Rändern aufeinanderstoßender Verkleidungselemente bildet.

Die FR-A-2 708 391 offenbart einen derartigen Rahmenschenkel.

An ein Rahmengestell eines Schaltschrankes sind die unterschiedlichsten Anforderungen gestellt, die alle durch die Querschnittsform der verwendeten Rahmenschenkel erfüllt werden müssen. Dabei können im Bereich des Boden- oder Deckrahmens durchaus in der Querschnittsform der vertikalen Rahmenschenkel abweichende Rahmenschenkel verwendet werden. Gerade bei den vertikal ausgerichteten Rahmenschenkeln des Rahmengestelles sind möglichst viele in mehrere Richtungen ausgerichtete Befestigungsmöglichkeiten gefordert. Außerdem muß mit möglichst geringem Materialaufwand für den Rahmenschenkel eine optimale Festigkeit, vorzugsweise Verwindungssteifigkeit erreicht und dennoch eine einfache Herstellung des Rahmenschenkels ermöglicht werden. Darüberhinaus muß im Bereich der vertikalen Außeneckkanten des Rahmengestelles genügend Freiraum zur Anbringung der Scharnierleiste einer Schranktür und zur Ausbildung und Unterbringung von Dichtungselementen für anzubringende Seitenwände oder der Schrankrückwand vorhanden sein.

Es sind eine Vielzahl von Rahmenschenkeln für ein Rahmengestell eines Schaltschrankes bekannt, die zum Teil die vorstehend genannten Anforderungen erfüllen, jedoch nicht in allen Belangen eine befriedigende Lösung bieten. Dabei schneiden als offene Hohlprofilabschnitte ausgebildete Rahmenschenkel wesentlich schlechter ab als geschlossene Hohlprofilabschnitte.

Es ist Aufgabe der Erfindung, einen Rahmenschenkel für ein Rahmengestell eines Schaltschrankes zu schaffen, der insbesondere in der Verwendung als vertikaler Rahmenschenkel die für universelle Befestigungsmöglichkeiten ausreichend hohe Festigkeit bei geringem Materialaufwand und einfacher Herstellbarkeit die gestellten Anforderungen optimal erfüllt.

Diese Aufgabe wird durch einem Rahmenschenkel mit den im Anspruch 1 angegebenen Merkmalen gelöst.

Die von den rechtwinklig aufeinanderstoßenden Außenseiten des Rahmengestelles ausgehende Profilinnenseite und Profilaußenseite lassen im Bereich der Außeneckkante genügend Freiraum, um die Anforderungen zum Anlenken einer Schranktür und zum Einführen der abgekanteten Verkleidungselemente, wie Schranktür, Seitenwände, Rückwand und Deckwand zu erfüllen. Die im Winkel zueinanderstehenden Profilseiten der Profilinnenseiten bilden zu beiden Seiten der Rahmengestelldiagonalen Befestigungsmöglichkeiten in verschiedenen Befestigungsebenen und -richtungen, die mit dem Winkel zwischen den Profilseiten wählbar sind. Der Materialaufwand des Rahmenschenkels ist gering und der leicht herstellbare Rahmenschenkel weist trotzdem eine große Verwindungssteifigkeit auf. Darüberhinaus bieten Profilinnenseite und Profilaußenseite mit ihren Profilseiten eine Innen- und eine Außenaufnahme, in die Montageschienen und/oder Einbauteile einbaubar sind, mit denen die vorzugsweise als Reihen von Befestigungsaufnahmen in einheitlicher Teilung ausgebildete "Systemlochung" erweitert und variiert werden kann.

Die Stabilität des Rahmenschenkels läßt sich ohne nennenswerten Materialaufwand dadurch erhöhen, daß die Übergänge von der Profilinnenseite zur Profilaußenseite als Übergangsabschnitte ausgebildet sind und/oder daß die Übergänge zwischen den Profilabschnitten der Profilinnenseite und der Profilaußenseite als Übergangsabschnitte ausgebildet sind. Dabei ist vorzugsweise vorgesehen, daß die Übergangsabschnitte im gleichen Winkel zu den sie verbindenden Profilabschnitten stehen.

Eine weitere Verbesserung der Stabilität des Rahmenschenkels ergibt sich dadurch, daß die der Rahmengestelldiagonalen zugekehrten Profilseiten der Profilinnenseite und der Profilaußenseite direkt miteinander verbunden sind, oder daß die der Rahmengestelldiagonalen zugekehrten Profilseiten der Profilinnenseite und der Profilaußenseite über parallel und im gleichen Abstand zur Symmetrieachse verlaufende Verbindungsabschnitte miteinander verbunden sind. Dabei kann beim Vorliegen von Verbindungsabschnitten vorgesehen sein, daß die Verbindungsabschnitte aufeinanderliegen und miteinander verbunden sind, um die Verwindungssteifigkeit des Rahmenschenkels zu erhöhen.

Die Befestigungsmöglichkeiten lassen sich zudem dadurch erweitern und variieren, daß die Übergangsabschnitte und/oder die Verbindungsabschnitte mit zusätzlichen Befestigungsaufnahmen versehen sind.

Wird der Rahmenschenkel als Stanz-Biege-Teil hergestellt, dann ist nach einer Ausgestaltung so verfahren, daß bei einem als Stanz-Biege-Teil hergestelltem Rahmenschenkel die Stoß- und Verbindungsstelle in den Bereich eines der Verbindungsabschnitte gelegt ist.

Die Einbaubarkeit des Rahmenschenkels in das Rahmengestell wird dadurch vereinfacht und erleichtert, daß der Neigunswinkel mit 90° gewählt ist und daß der Querschnitt auch spiegelbildlich zur Rahmengestelldiagonalen gewählt ist, da dann der Rahmenschenkel auch mit vertauschter Profilinnen- und Profilaußenseite in das Rahmengestell einbezogen werden kann. Dabei sind dann die Profilseiten, die Übergangsabschnitte und die Verbindungsabschnitte der Profilinnenseite und der Profilaußenseite mit Befestigungsaufnahmen versehen, die nicht unbedingt in gleicher Ausbildung und Verteilung eingebracht sein müssen. So kann die Profilinnenseite eine metrische Teilung und die Profilaußenseite eine Teilung im Zollmaß bevorzugen.

Die Erfindung wird anhand von vier verschiedenen, im Querschnitt dargestellten Ausführungsbeispielen eines Rahmenschenkels näher erläutert.

Bei allen Ausführungsbeispielen sind mit AS1 und AS2 die beiden rechtwinklig aufeinanderstoßenden Außenseiten eines Rahmengestelles angedeutet, dessen Rahmengestelldiagonale RGD als Winkelhalbierende eingetragen ist. Die beiden Außenseiten AS1 und AS2 bilden eine Außeneckkante AEK, die jedoch vom Rahmenschenkel mit seiner Profilaußenseite 20 nicht beeinträchtigt wird und genügend Freiraum FR beläßt. Die Profilaußenseite 20 und die Profilinnenseite 10 des Rahmenschenkels sind spiegelbildlich zu einer Symmetrieachse SA ausgebildet, welche im Bereich der Außenkanten AK und AK2 auf die Außenseiten AS1 und AS2 des Rahmengestelles trifft. Diese Symmetrieachse SA steht in einem Neigungswinkel α zur Rahmengestelldiagonalen RGD.

Bei den Ausführungsbeispielen nach Fig. 1 und 2 hat die Außenkante AK1 einen größeren Abstand zur Außeneckkante AEK wie die Außenkante AK2 und der Neigungswinkel α weicht von 90° ab, während bei den Ausführungsbeispielen nach Fig. 3 und 4 die Abstände der Außenkanten AK1 und AK2 von der Außeneckkante AEK gleich groß sind und der Neigungswinkel α=90° beträgt, d. h. der Rahmenschenkel hat auch einen zur Rahmengestelldiagonalen RGD spiegelbildlichen Querschnitt.

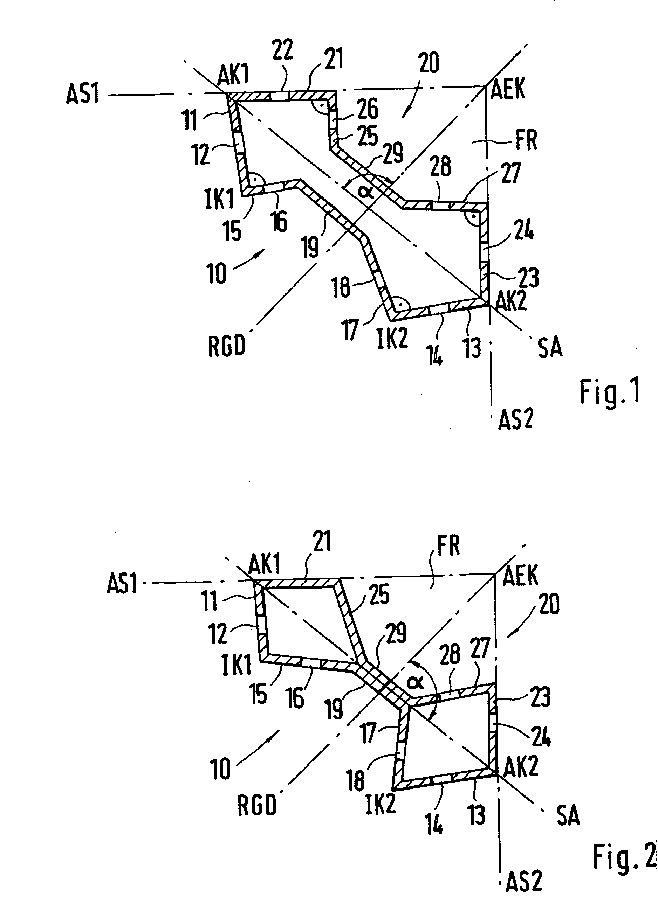

Beim Ausführungsbeispiel nach Fig. 1 gehen die Profilinnenseite 10 und die Profilaußenseite 20 mit Profilseiten 11 und 21 bzw. 13 und 23 in die Außenkanten AK1 und AK2 über. An diesen Profilseiten 11 und 13 bzw. 21 und 23 schließen sich im rechten Winkel Profilseiten 15 und 17 bzw. 25 und 27 an. Die Profilseiten 15 und 17 bzw. 25 und 27 sind über einen Verbindungsabschnitt 19 bzw. 29 miteinander verbunden. Die Verbindungsabschnitte 19 und 29 verlaufen parallel zueinander und parallel zu der Symmetrieachse SA. Die Profilseiten 11, 13, 15, 17, 21, 23, 25, 27 sind mit Befestigungsaufnahmen 12, 14, 16, 18, 22, 24, 26, 28 versehen, die beliebig ausgebildet und ausgerichtet sein können. Sie können jedoch auch als identische Systembefestigungsreihen ausgebildet und aufeinander ausgerichtet sein. Der Abstand der Befestigungsaufnahmen 12 und 16 von der Innenkante IK1 und der Abstand der Befestigungsaufnahmen 14 und 18 von der Innenkante IK2 können gleich oder auch unterschiedlich gewählt werden. Dasselbe gilt für die Auslegung der, Abstände auf der Profilaußenseite 20. Die Abstände der Profilinnenseite 10 und der Profilaußenseite 20 können identisch oder auch unterschiedlich gewählt werden, ohne die spiegelbildliche Ausbildung des Rahmenschenkel-Querschnittes zur Symmetrieachse SA aufzugeben.

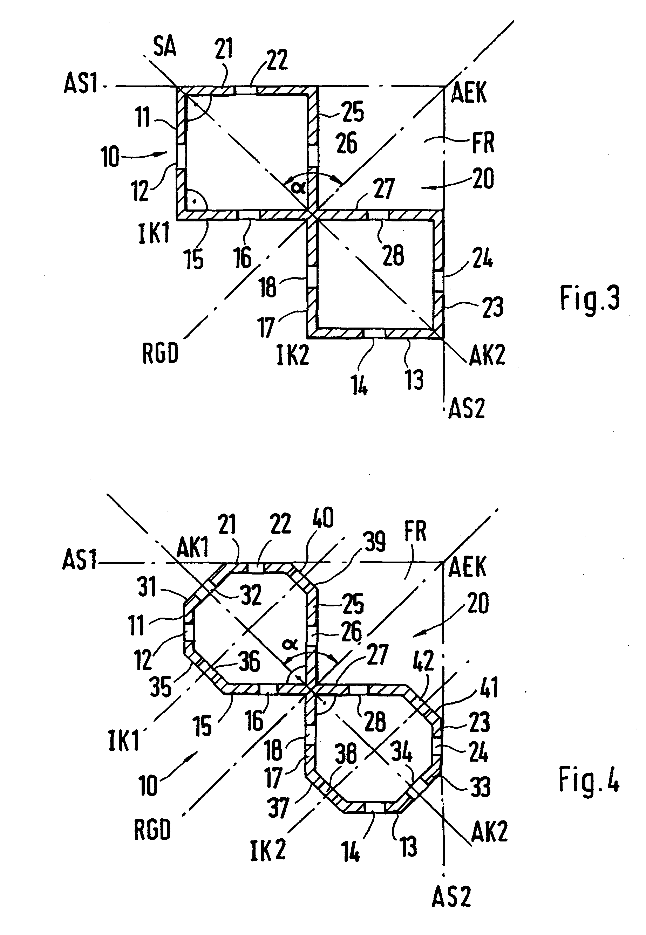

Wie Fig. 2 zeigt, können die Verbindungsabschnitte 19 und 29 auch direkt aufeinanderliegen und miteinander verbunden sein, wobei im Bereich des einen Verbindungsabschnittes (z.B. 19) das Stanz-Biege-Teil zusammengeführt und geschlossen werden kann. Die Profilseiten 11 und 15 bzw. 21 und 25 schließen einen stumpfen Winkel ein, während die Profilseiten 13 und 17 bzw. 23 und 27 spitzwinklig aufeinanderstoßen. Einzelne Profilseiten, wie 21 und 25 können auch ohne Befestigungsaufnahmen versehen sein. Der Neigungswinkel α kann gleich oder entgegengesetzt zur Rahmengestelldiagonalen RGD geneigt sein. Er kann jedoch auch 90° betragen und die unsymmetrische Auslegung zur Rahmengestelldiagonalen RGD kann beibehalten werden. Die stumpfen und spitzen Winkel zwischen den Profilseiten können entsprechend den Anforderungen an die Befestigungsebenen und -richtungen sowie die Stabilität des Rahmenschenkels angepaßt und optimiert werden.

Der Rahmenschenkel nach Fig. 3 hat einen zur Symmetrieachse SA und zur Rahmengestelldiagonalen RGD spiegelbildlichen Querschnitt mit zwei im wesentlichen Vierkanthohlräumen. Dabei können die Profilseiten 11, 13, 15, 17, 21, 23, 25 und 27 die gleiche Breite aufweisen und alle mit Befestigungsaufnahmen 12, 14, 16, 18, 22, 24, 26, 28 versehen sein. Die Profilseiten 11, 17, 23, und 25 verlaufen parallel zur Außenseite AS2 und die Profilseiten 13, 15, 23 und 27 parallel zur Außenseite AS1. Die Profilinnenseite 10 und Profilaußenseite 20 sind identisch, so daß der Rahmenschenkel auch mit vertauschten Seiten in das Rahmengestell einbezogen werden kann. Die Profilinnenseite 10 und die Profilaußenseite 20 lassen sich bei dieser Querschnittsauslegung auch mit anders verteilten und/oder ausgebildeten Befestigungsaufnahmen auslegen. Der Winkel α beträgt in diesen Fällen stets 90°.

Bei dem Ausführungsbeipiel nach Fig. 4 sind die Außenkanten AK1 und AK2, die Innenkanten IK1 und IK2 sowie die den Innenkanten IK1 und IK2 entsprechenden (nicht bezeichneten) Außenkanten des Rahmenschenkels nach Fig. 3 abgeschrägt und durch Übergangsabschnitte 31, 33, 35, 37, 39 und 41 ersetzt. Diese Übergangsabschnitte verbinden die aufeinanderstoßenden Profilseiten und stehen zu diesen im gleichen Winkel von 135 °. Die Übergangsabschnitte 31, 33, 35, 37, 39 und 41 können zur Erweiterung der Befestigungsmöglichkeiten auch mit Befestigungsaufnahmen 32, 34, 36, 38, 40 und 42 versehen sein. Die Profilseiten 15, 17, 25 und 27 stoßen im Schnittpunkt zwischen Symmetrieachse SA und Rahmengestellachse RGD aufeinander und sind dort fest miteinander verbunden, wie beim Ausführungsbeispiel nach Fig. 3.

Wie die Ausführungsbeispiele zeigen, bietet die zu einer Symmetrieachse SA, die in einem Neigungswinkel α zu der Rahmengestelldiagonalen RGD steht, spiegelbildliche Ausgestaltung des Rahmenschenkel-Querschnitts in Verbindung mit den jeweils zwei Profilseiten zu beiden Seiten der Rahmengestelldiagonalen RGD von Profilinnenseite 10 und Profilaußenseite 20 vielfache Gestaltungsmöglichkeiten in Bezug auf die Befestigungsebenen, Befestigungsrichtungen und der Stabilität des Rahmenschenkels, ohne den Freiraum FR zur Außeneckkante AEK hin einzuengen.

## Patentansprüche

1. Rahmenschenkel für ein Rahmengestell eines Schaltschrankes, der eine Profilinnenseite (10) und eine Profilaußenseite (20) aufweist, deren Übergänge im Abstand zur Außeneckkante (AEK) des Rahmengestelles liegen, der mit der Profilaußenseite (20) zur Außeneckkante (AEK) hin einen Freiraum (FR) zum Anlenken einer Schranktür und Einführen von Rändern aufeinander stoßender Verkleidungselemente bildet, wobei der Rahmenschenkel zu einer Symmetrieachse (SA) spiegelbildlich ausgebildet ist, die in einem Neigungswinkel (α) zur Rahmengestelldiagonale (RGD) steht, wobei der Rahmenschenkel sowohl auf der Profilinnenseite (10) als auch auf der Profilaußenseite (20) zwischen der Rahmengestelldiagonale (RGD) und der Symmetrieachse (SA) mindestens zwei in einem Winkel zueinander stehende Profilababschnitte (11,15 bzw. 13,17 und 21,25 bzw. 23,27) aufweist, von denen zumindest ein Teil mit Befestigungsaufnahmen (12,14,16,18 bzw. 22,24,26,28) versehen ist, wobei die der Rahmengestelldiagonale (RGD) zugekehrten Profilseiten (15,17 bzw. 25,27) der Profilinnenseite (10) und der Profilaußenseite (20) direkt oder über parallel und im gleichen Abstand zur Symmetrieachse (SA) verlaufende Verbindungsabschnitte (19 bzw. 29) miteinander verbunden sind und wobei der Neigungswinkel (α) mit 90° gewählt und der Querschnitt des Rahmenschenkels auch spiegelbildlich zur Rahmengestelldiagonalen (RGD) ausgebildet ist.

2. Rahmenschenkel nach Anspruch 1,
**dadurch gekennzeichnet,**
**dass** die Übergänge von der Profilinnenseite (10) zur Proflaußenseite (20) als Übergangsabschnitte (31,33) ausgebildet sind.

3. Rahmenschenkel nach Anspruch 1 oder 2,
**dadurch gekennzeichnet,**
**dass** die Übergänge von der Profilinnenseite (10) zur Profilaußenseite (20) als Übergangsabschnitte (31,33) ausgebildet sind.

4. Rahmenschenkel nach Anspruch 2 oder 3,
**dadurch gekennzeichnet**,
die Übergangsabschnitte (31,33,35,37) im gleichen Winkel zu den sie verbindenden Profilabschnitten (11,21,11,15,13,17,13,23,23,27,21,25) stehen.

5. Rahmenschenkel nach einem der Ansprüche 1 bis 4,
**dadurch gekennzeichnet,**
**dass** die Übergangsabschnitte (31,33,35,37) und/oder die Verbindungsabschnitte (19,29) mit zusätzlichen Befestigungsaufnahmen (32,33,36,38) versehen sind.

6. Rahmenschenkel nach einem der Ansprüche 1 bis 5,
**dadurch gekennzeichnet,**
**dass** die Verbindungsabschnitte (19,29) aufeinander liegen und miteinander verbunden sind.

7. Rahmenschenkel nach einem der Ansprüche 1 bis 6,
**dadurch gekennzeichnet,**
**dass** bei einem als Stanz-Biege-Teil hergestellten Rahmenschenkel die Stoß- und Verbindungsstelle in den Bereich eines der Verbindungsabschnitte (19 oder 29) gelegt ist.

## Claims

1. Frame leg for a framework of a switch cabinet, which has an inner profile side (10) and an outer profile side (20) with transitions spaced apart from the outer corner edge (AEK) of the framework, the frame leg forming, with the outer profile side (20), in the direction of the outer corner edge (AEK), a free space (FR) for the articulation of a cabinet door and the introduction of peripheries of abutting cladding elements, it being the case that the frame leg is designed in a mirror-symmetrical manner in relation to an axis of symmetry (SA) which is located at an angle of inclination (α) in relation to the framework diagonal (RGD), that, both on the inner profile side (10) and on the outer profile side (20), the frame leg, between the framework diagonal (RGD) and the axis of symmetry (SA), has at least two profile sections (11, 15 and 13, 17 and also 21, 25 and 23, 27) which are located at an angle in relation to one another and of which at least part is, or some are, provided with fastening mounts (12, 14, 16, 18 and 22, 24, 26, 28, respectively), that the respective profile sides (15, 17 and 25, 27) of the inner profile side (10) and of the outer profile side (20), these profile sides being directed towards the framework diagonal (RGD), are connected to one another directly or via connecting sections (19 and 29, respectively) which are spaced apart equally from the axis of symmetry (SA), and that the angle of inclination (α) is selected to be 90° and the cross section of the frame leg is also designed to be mirror-symmetrical in relation to the framework diagonal (RGD).

2. Frame leg according to Claim 1, **characterized in that** the transitions from the inner profile side (10) to the outer profile side (20) are designed as transition sections (31, 33).

3. Frame leg according to Claim 1 or 2, **characterized in that** the transitions from the inner profile side (10) to the outer profile side (20) are designed as transition sections (31, 33).

4. Frame leg according to Claim 2 or 3, **characterized in that** the transition sections (31, 33, 35, 37) are located at identical angles in relation to the profile sections (11, 21, 11, 15, 13, 17, 13, 23, 23, 27, 21, 25) connecting them.

5. Frame leg according to one of Claims 1 to 4, **characterized in that** the transition sections (31, 33, 35, 37) and/or the connecting sections (19, 29) are provided with additional fastening mounts (32, 34, 36, 38).

6. Frame leg according to one of Claims 1 to 5, **characterized in that** the connecting sections (19, 29) are located one upon the other and are connected to one another.

7. Frame leg according to one of Claims 1 to 6, **characterized in that**, in the case of a frame leg produced by punching and bending, the abutment and connecting location is positioned in the region of one of the connecting sections (19 or 29).

## Revendications

1. Montant pour le châssis d'une armoire de distribution, qui comprend un côté intérieur de profilé (10) et un côté extérieur de profilé (20), dont les jonctions sont situées à distance de l'arête angulaire extérieure (AEK) du châssis, qui forme avec le côté extérieur de profilé (20) vers l'arête angulaire extérieure (AEK) un espace libre (FR) pour l'articulation d'une porte d'armoire et l'introduction de bords d'éléments d'habillage butant l'un contre l'autre, dans lequel le montant a une forme symétrique par rapport à un axe de symétrie (SA) qui forme un angle d'inclinaison (α) avec la diagonale du châssis (RGD), dans lequel le montant présente aussi bien sur le côté intérieur de profilé (10) que sur le côté extérieur de profilé (20), entre la diagonale du châssis (RGD) et l'axe de symétrie (SA), au moins deux parties de profilé (11, 15 respectivement 13, 17 et 21, 25 respectivement 23, 27) formant un angle entre elles, dont au moins une partie est pourvue de logements de fixation (12, 14, 16, 18 respectivement 22, 24, 26, 28), dans lequel les côtés de profilé (15, 17 respectivement 25, 27) du côté intérieur de profilé (10) et du côté extérieur de profilé (20) tournés vers la diagonale du châssis (RGD) sont assemblés l'un à l'autre directement ou par des parties d'assemblage (19 respectivement 29) orientées parallèlement et à égale distance de l'axe de symétrie (SA) et dans lequel l'angle d'inclinaison (α) est choisi égal à 90° et la section transversale du montant est également formée de façon symétrique par rapport à la diagonale du châssis (RGD).

2. Montant selon la revendication 1, **caractérisé en ce que** les jonctions du côté intérieur de profilé (10) au côté extérieur de profilé (20) sont formées par des parties de jonction (31, 33).

3. Montant selon la revendication 1 ou 2, **caractérisé en ce que** les jonctions du côté intérieur de profilé (10) au côté extérieur de profilé (20) sont formées par des parties de jonction (31, 33).

4. Montant selon la revendication 2 ou 3, **caractérisé en ce que** les parties de jonction (31, 33, 35, 37) forment le même angle par rapport aux parties de profilé qui les relient (11, 21, 11, 15, 13, 17, 13, 23, 23, 27, 21, 25).

5. Montant selon l'une quelconque des revendications 1 à 4, **caractérisé en ce que** les parties de jonction (31, 33, 35, 37) et/ou les parties d'assemblage (19, 29) sont pourvues de logements de fixation supplémentaires (32, 33, 36, 38).

6. Montant selon l'une quelconque des revendications 1 à 5, **caractérisé en ce que** les parties d'assemblage (19, 29) sont appliquées l'une sur l'autre et sont assemblées l'une à l'autre.

7. Montant selon l'une quelconque des revendications 1 à 6, **caractérisé en ce que**, dans un montant constitué par une pièce formée à la presse, le point de contact et d'assemblage est situé dans la région d'une des parties d'assemblage (19 ou 29).
